# FASCICULE DE BREVET EUROPEEN

(11) **EP 4 237 314 B1**
(45) Date de publication et mention de la délivrance du brevet: **28.01.2026**
(21) Numéro de dépôt: 21798050.7
(22) Date de dépôt: 28.10.2021
(51) Int. Cl.: B62D 25/04, B62D 25/06, E05D 5/06

(54) **SUPPORT D'ARTICULATION POUR UNE PORTE DE COFFRE DE VÉHICULE**
GELENKSTÜTZE FÜR EINE KOFFERRAUMTÜR EINES FAHRZEUGS
HINGE SUPPORT FOR A VEHICLE TRUNK DOOR

(30) Priorité: 30.10.2020 FR 2011146
(43) Date de publication de la demande: 06.09.2023
(73) Titulaire: Renault s.a.s, 92100 Boulogne Billancourt (FR)
(72) Inventeur: CABRAL, Guillaume, 77170 BRIE COMTE ROBERT (FR); CHAILLOU, Benoit, 78280 GUYANCOURT (FR)
(86) Numéro de dépôt international: PCT/EP2021/079998
(87) Numéro de publication internationale: WO 2022/090400

(56) Documents cités:
- EP-A1- 3 010 789
- DE-A1- 102012 009 970
- FR-A1- 3 090 556
- JP-A- 2012 224 109
- JP-B2- 5 952 211
- KR-A- 20150 057 609
- US-A1- 2020 223 296
- US-A1- 2020 307 506
- US-B2- 6 974 180

## Description

### Domaine technique de l'invention

L'invention concerne un support d'articulation pour une porte de coffre de véhicule. L'invention porte encore sur un agencement comprenant un tel support d'articulation. L'invention porte encore sur une caisse comprenant au moins un tel agencement et/ou au moins un tel support d'articulation. L'invention porte enfin sur un véhicule comprenant une telle caisse et/ou un tel agencement et/ou un tel support d'articulation.

### Etat de la technique antérieure

Un véhicule, en particulier un véhicule automobile, comprend généralement une porte de coffre pivotante autour d'un axe s'étendant transversalement. En cas de porte de coffre intégrant une vitre ou lunette arrière, c'est-à-dire de type hayon, la porte de coffre a en outre des dimensions conséquentes. Ainsi, un hayon est particulièrement lourd. Généralement, un tel hayon pivote grâce à deux moyens de pivotement agencés au niveau d'une gouttière centrale arrière de la porte de coffre et/ou au niveau d'une traverse arrière de pavillon.

Cependant, lors du cycle de vie du véhicule, le poids du hayon génère de fortes contraintes s'appliquant sur ces deux moyens de pivotement. Il en résulte une torsion entre la gouttière centrale arrière et/ou la traverse arrière de pavillon et des doublures de custode droite et gauche. Cet inconvénient est amplifié en cas de moyen de pivotement du hayon agencé à proximité de la doublure de custode adjacente.

En outre, en cas de hayon s'étendant proche de l'horizontale en position fermée, des gouttières latérales d'anneau de coffre s'étendent alors également horizontalement ce qui crée des points de cassure au niveau de la jonction, ou carre, entre chaque gouttière latérale et la doublure de custode adjacente. De tels points de cassure tendent à créer un affaiblissement de l'anneau arrière de coffre.

Ainsi, il convient de limiter, voire d'éviter, tout effort de torsion entre la gouttière centrale arrière et/ou la traverse arrière de pavillon et chaque doublure de custode. En outre, il convient d'éviter tout affaiblissement ultérieur de l'anneau arrière ce qui est préjudiciable en termes de précision de fermeture du hayon et/ou en termes de qualité perçue et/ou de robustesse de la caisse.

Le document US 6 974 180 82 divulgue un agencement de cadre de toit pour véhicules automobiles, incluant un cadre latéral de toit et un élément de renforcement pour supporter une charnière de hayon, un renfort de charnière et un profil creux pour renforcer la rigidité du cadre latéral de toit.

### Présentation de l'invention

Le but de l'invention est de fournir une solution de renfort remédiant aux inconvénients ci-dessus. En particulier, l'invention propose une solution permettant la fixation des moyens de pivotement à proximité de la jonction entre chaque gouttière latérale et la doublure de custode adjacente.

### Résumé de l'invention

Pour atteindre cet objectif, l'invention porte sur un support d'articulation pour un ouvrant de véhicule, notamment un ouvrant de type porte de coffre, comprenant une forme creuse comprenant un fond s'étendant ou s'étendant sensiblement sur deux plans sensiblement perpendiculaires.

Le support d'articulation peut comprendre :
- un premier élément de liaison mécanique, notamment un élément de fixation, à un renfort arrière de custode, et
- un deuxième élément de liaison mécanique, notamment un élément de fixation, à un renfort avant extérieur de custode et/ou à un renfort de brancard et/ou à une doublure de brancard arrière.

Le support d'articulation peut comprendre une première ouverture ménagée dans la forme creuse de sorte à permettre le passage d'au moins une partie d'une pince de soudure.

Le support d'articulation peut comprendre une deuxième ouverture ménagée dans la forme creuse de sorte à permettre le passage d'au moins un conduit et/ou fil électrique et/ou câble à travers le support d'articulation.

Le support d'articulation peut être conformé en tôle, notamment en tôle emboutie, notamment en tôle d'acier, notamment d'une épaisseur comprise en 1 mm et 3 mm, notamment de l'ordre de 1,5 mm.

Le support d'articulation peut comprendre un moyen de maintien d'un axe de pivotement d'un ouvrant.

Le moyen de maintien peut comprendre une chape rapportée sur le support d'articulation, notamment fixée au support d'articulation par soudage ou par rivetage ou par au moins un système vis/écrou.

L'invention porte encore sur un agencement côté droit ou côté gauche pour un véhicule, notamment pour un véhicule automobile, comprenant un renfort avant extérieur de custode et/ou une doublure de brancard et/ou un renfort arrière de custode et/ou un renfort de brancard et un support d'articulation tel que défini précédemment, le support d'articulation étant fixé sur le renfort avant extérieur de custode et/ou sur la doublure de brancard et/ou sur le renfort arrière de custode et/ou sur le renfort de brancard, notamment par soudage, notamment par soudage par points.

L'invention porte encore sur une caisse de véhicule, notamment de véhicule automobile, la caisse comprenant au moins un agencement tel que défini précédemment, notamment un agencement côté droit et un agencement côté gauche, et/ou au moins un support d'articulation tel que défini précédemment.

L'invention porte encore sur un véhicule, notamment un véhicule automobile, comprenant une caisse telle que définie précédemment, et/ou au moins un agencement tel que défini précédemment, et/ou au moins un support d'articulation tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue partielle en perspective d'une caisse du véhicule selon un mode de réalisation, sans porte de coffre.
[Fig. 3] La figure 3 est une vue en perspective d'un support d'articulation selon un mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

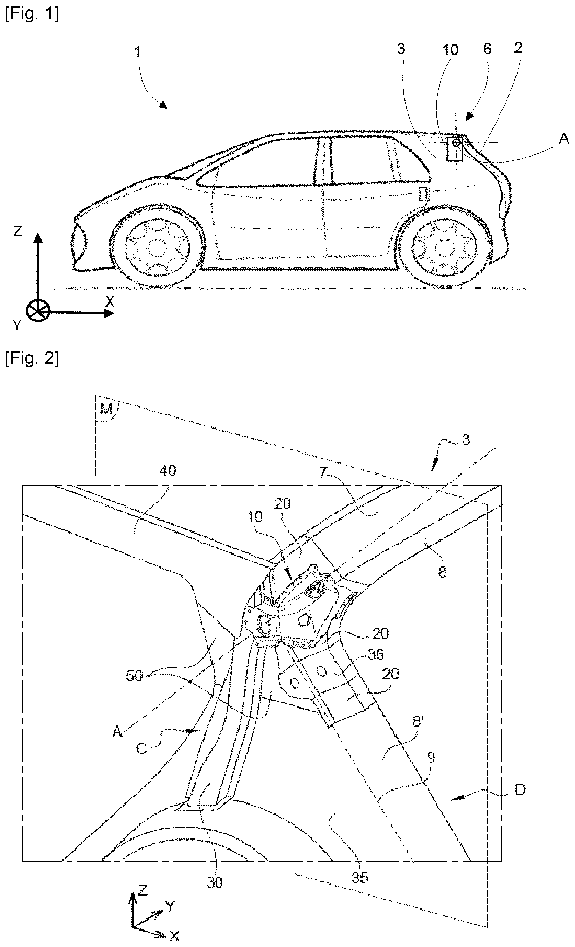

La figure 1 illustre schématiquement un véhicule, de préférence un véhicule automobile 1, selon un mode de réalisation.

Le véhicule 1 comprend une caisse 3 et un ouvrant 2. De préférence, l'ouvrant 2 est une porte de coffre, par exemple de type hayon. Par exemple, le hayon 2 pivote pour s'ouvrir et se fermer autour d'un axe A s'étendant transversalement ou sensiblement transversalement.

Le véhicule 1 comprend au moins un support d'articulation 10 pour la porte de coffre qui est détaillé par la suite. De préférence, le véhicule comprend un support d'articulation côté gauche (illustré sur les figures 1, 2 et 3) et un support d'articulation côté droit. De préférence, les supports d'articulation sont symétriques par rapport à un plan médian M (illustré sur la figure 2) du véhicule s'étendant longitudinalement et verticalement.

Le véhicule 1 et/ou la caisse 3 comprend encore au moins un agencement 6.

De préférence, l'agencement 6 côté gauche comprend une doublure de brancard arrière 50 gauche et/ou un renfort avant extérieur de custode 30 gauche et/ou un renfort arrière de custode 20 en partie supérieure gauche et/ou un renfort de brancard avant 40 gauche et un support d'articulation 10 gauche. Ainsi, l'agencement côté droit (non illustré) comprend de préférence une doublure de brancard arrière droite et/ou un renfort avant extérieur de custode droit et/ou un renfort arrière de custode en partie supérieure droit et/ou un renfort de brancard avant droit et un support d'articulation droit.

Pour simplifier, seul le côté gauche de la caisse 3 est représenté et décrit. Par exemple, le côté droit est la symétrie du côté gauche par rapport au plan médian M.

Alternativement, une ou plusieurs différences existent entre les deux côtés, notamment quant à la forme de la doublure de brancard arrière et/ou du renfort avant extérieur de custode et/ou du renfort arrière de custode en partie supérieure et/ou du renfort de brancard avant. Par exemple, un orifice pour une pipe d'alimentation en carburant et/ou un orifice pour une prise de recharge en électricité est agencé côté droit et/ou côté gauche. Dans ce cas, la doublure de brancard arrière et/ou le renfort avant extérieur de custode et/ou le renfort arrière de custode en partie supérieure et/ou le renfort de brancard avant comprennent un orifice ou une portion d'orifice, ou encore une cavité ou une saillie au niveau d'un tel orifice.

Comme illustré sur la figure 2 en particulier, le support d'articulation 10 est fixé sur le renfort avant extérieur de custode 30. Le support d'articulation est encore fixé sur le renfort arrière de custode 20. De préférence, comme illustré, le mode de fixation est la soudure, de préférence par points.

En complément, le support d'articulation est également fixé sur la doublure de brancard 50 arrière et/ou sur le renfort de brancard 40 avant. Là encore, de préférence, le mode de fixation est la soudure, de préférence par points.

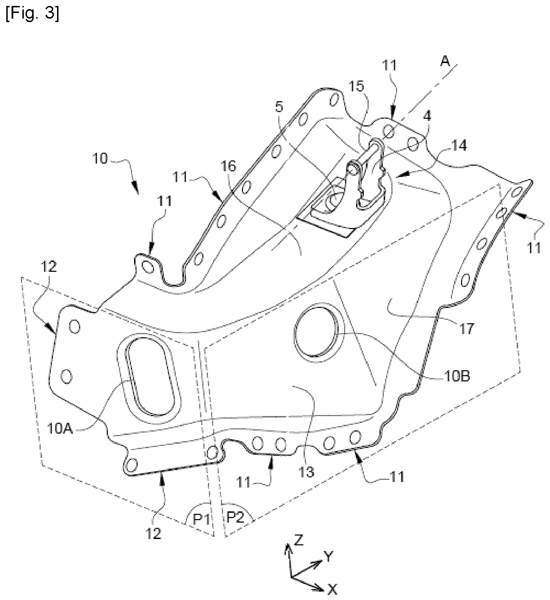

Plus précisément, comme illustré en particulier sur la figure 3, le support d'articulation 10 comprend une forme creuse. La forme creuse comprend un fond 13 s'étendant, ou s'étendant sensiblement, sur ou dans deux plans P1, P2 perpendiculaires, ou sensiblement perpendiculaires.

Par exemple, le plan P1 s'étend verticalement et longitudinalement, ou sensiblement verticalement et longitudinalement. Par exemple, le plan P2 s'étend verticalement et transversalement, ou sensiblement verticalement et transversalement.

Avantageusement, comme illustré sur les figures 2 et 3, le support d'articulation 10 comprend une première ouverture 10A. La première ouverture 10A est ménagée dans la forme creuse de sorte à permettre le passage d'au moins une partie d'une pince de soudure. Ainsi, la soudure d'une pièce située sous le support d'articulation demeure possible, le passage de la pince étant prévu. Par « sous », on entend à l'intérieur d'un volume délimité par la forme creuse. Par exemple, la première ouverture est oblongue comme illustré, ou a une autre forme, par exemple circulaire, carrée, rectangulaire ou encore ovale. De préférence, la première ouverture 10A est ménagée selon un ou des axes s'étendant perpendiculairement, ou sensiblement perpendiculairement, par rapport au plan P1.

Avantageusement encore, le support d'articulation 10 comprend une deuxième ouverture 10B. La deuxième ouverture est ménagée dans la forme creuse de sorte à permettre le passage d'au moins un conduit et/ou fil électrique et/ou câble à travers le support d'articulation 10. Par exemple, la deuxième ouverture est circulaire comme illustré, ou a une autre forme, par exemple oblongue, carrée, rectangulaire ou encore ovale. De préférence, la deuxième ouverture 10B est ménagée selon un ou des axes s'étendant perpendiculairement, ou sensiblement perpendiculairement, par rapport au plan P2.

Le support d'articulation 10 comprend de préférence un premier élément de liaison mécanique 11 au renfort arrière de custode 20. Le premier élément de liaison mécanique 11 est par exemple un élément de fixation, de préférence comprenant au moins un rebord ou bordure ou paroi d'extrémité. Un tel rebord est de préférence suffisamment large pour permettre de réaliser des points de soudure pour la fixation du support 10. Avantageusement, comme illustré sur la figure 3, le premier élément de liaison mécanique 11 comprend plusieurs rebords, par exemple six, répartis dans certaines zones du périmètre extérieur du support 10. Ces rebords sont destinés à recevoir des points de soudure, et/ou des rivets, notamment à divers emplacements matérialisés par des cercles sur les figures 2 et 3.

Le support d'articulation comprend encore un deuxième élément de liaison mécanique 12 au renfort avant extérieur de custode 30 et/ou au renfort de brancard 40 et/ou à la doublure de brancard arrière 50. Le deuxième élément de liaison mécanique 12 est par exemple un élément de fixation, de préférence comprenant au moins un rebord ou bordure ou paroi d'extrémité. Un tel rebord est de préférence suffisamment large pour permettre de réaliser des points de soudure dessus. Avantageusement, comme illustré sur la figure 3, le deuxième élément de liaison mécanique 12 comprend plusieurs rebords, par exemple deux, répartis dans certaines zones du périmètre extérieur du support 10. Ces rebords sont destinés à recevoir des points de soudure, et/ou des rivets, à divers emplacements matérialisés par des cercles sur les figures 2 et 3.

Afin d'assurer un rôle de renfort qui sera explicité par la suite, le support d'articulation 10 est de préférence conformé en tôle, par exemple en tôle emboutie. Avantageusement, le support d'articulation est en tôle d'acier, par exemple d'une épaisseur comprise en 1 mm et 3 mm, de préférence de l'ordre de 1,5 mm.

Alternativement, en cas de caisse comprenant des éléments en alliage d'aluminium, le support d'articulation est également en tôle d'alliage d'aluminium. L'épaisseur est alors supérieure de sorte à assurer la rigidité recherchée.

Comme illustré sur la figure 3, du fait de sa forme emboutie ayant une paroi de fond incurvé 13 qui s'étend sur deux plans sensiblement perpendiculaires P1, P2, la paroi de fond comprend en outre un bord supérieur 16 et un bord inférieur 17 sensiblement perpendiculaires. De préférence, le bord supérieur 16 s'étend selon un plan sensiblement horizontal et/ou sensiblement perpendiculaire aux premier et deuxième plans. De préférence, le bord supérieur 16 s'étend depuis une face comprenant l'orifice 10B jusqu'à l'élément de liaison 11, ou sensiblement jusqu'à l'élément de liaison 11. De préférence, une fois le support d'articulation fixé à la caisse 3, le bord supérieur 16 constitue une paroi sensiblement plane s'étendant dans un plan horizontal sur laquelle vient se positionner et se fixer un moyen de pivotement pour la porte de coffre.

De préférence, comme illustré sur la figure 3, le support d'articulation 10 comprend un moyen de maintien 14 d'un arbre de pivotement 15 de la porte de coffre 2. Pour rappel, l'axe de pivotement A s'étend transversalement ou sensiblement transversalement. Ainsi, de préférence, l'arbre de pivotement 15 a un axe confondu ou sensiblement confondu avec l'axe de pivotement A. Par exemple, le moyen de maintien 14 comprend une chape 4 rapportée sur le support d'articulation 10. Avantageusement, la chape 4 est fixée au support d'articulation 10 par soudage et/ou par rivetage et/ou par au moins un système vis/écrou 5, éventuellement complété d'un moyen de centrage ou un moyen de positionnement ou de pré-positionnement (non illustré).

En résumé le support d'articulation ou boîtier 10 de forme creuse est fixé à la fois sur le renfort arrière de custode 20 en partie supérieure et sur le renfort avant extérieur de custode 30 et/ou sur la doublure de brancard arrière 50 et/ou sur le renfort de brancard avant 40. De telles ancrages sur différents éléments de la caisse 3 renforcent la rigidité de l'anneau arrière D à proximité de l'arbre de pivotement 15 du hayon 2. Ainsi, l'anneau arrière comprenant une traverse arrière 7 de pavillon et/ou une gouttière arrière centrale 8 ne subit pas de torsion par rapport à une doublure de custode 35 adjacente. En effet, la liaison entre l'anneau arrière et la doublure de custode 35 s'en trouve renforcée.

Ainsi, bien que les axes de pivotement du hayon soient agencés selon la direction transversale dans des zones très éloignées du plan médian M, les supports d'articulation 10 rendent la caisse 3 particulièrement rigide à ces emplacements ce qui limite, voire empêche, les torsions. En outre, la solution satisfait à des normes de tenue, notamment en torsion et/ou en endurance, particulièrement contraignantes.

De préférence, le support d'articulation 10 est soudé directement au renfort avant extérieur de custode 30 sur lequel est également assemblé, par exemple par soudage, le renfort de brancard avant 40. Ainsi, le support d'articulation retrouve des liaisons de soudure avec le renfort avant extérieur de custode 30.

A noter que le renfort avant extérieur de custode 30 comprend lui aussi un corps creux comme illustré sur la figure 2. Ainsi, le fait de prolonger le corps creux du support d'articulation 10 jusqu'au corps creux, ou sensiblement jusqu'au corps creux du renfort avant extérieur de custode 30 au niveau du pied C, ou pied arrière, améliore la rigidité. Ainsi, le support d'articulation supporte le moyen de pivotement 14 tout en assurant une fonction de rigidité et/ou de tenue à une carre 9 de l'anneau D. Par « carre 9 » (illustrée en pointillés sur la figure 2), on entend une arête s'étendant entre l'anneau arrière, ou anneau D, notamment au niveau de la jonction entre la gouttière latérale 8' et la doublure de custode 35. En effet, grâce à la forme creusée du support d'articulation 10, son assemblage à la caisse réalise un corps creux qui tient la carre entre l'anneau arrière et la doublure de custode. La rigidité locale de la zone de la gouttière latérale 8' qui reçoit l'articulation de la porte de coffre s'en trouve fortement améliorée.

En outre, la solution permet d'allonger transversalement la gouttière centrale 8 afin de recouvrir davantage chaque gouttière latérale 8' ce qui facilite la fixation de la gouttière centrale aux gouttières latérales, notamment par soudure, en particulier par soudure par points. C'est de préférence au niveau de cette zone de recouvrement qu'est positionné le pied ou support d'articulation 10.

En outre, bien que les gouttières latérales arrière 8' s'étendent avec une pente relativement faible par rapport à l'horizontal, la solution offre une robustesse des carres 9, ce qui permet d'éliminer tout point de cassure au niveau de la ligne de carre. Autrement dit, la solution évite tout point de cassure de la ligne de carre tendant à créer un affaiblissement de l'anneau arrière. En effet, le support d'articulation 10 forme un pontet de liaison entre le renfort arrière de custode 20 et le renfort avant extérieur de custode 30, voire avec le renfort de brancard avant 40 et/ou la doublure de brancard arrière 50 et/ou la doublure de custode 35 et/ou un renfort d'ancrage de renvoi de ceinture de sécurité 36 (illustré sur la figure 2). L'anneau arrière entre les deux zones que sont la gouttière latérale 8' et le coté latéral arrière délimité par la doublure de custode 35 est particulièrement rigidifié. Notamment, le pontet de liaison formé par le support d'articulation permet de relier ensemble le renfort avant extérieur de custode 30, la doublure de brancard 50, le renfort arrière de custode partie supérieure 20 et le support d'articulation 10 lui-même, de sorte que l'articulation de la porte de coffre est positionnée sur une zone de la caisse dont la rigidité est augmentée.

Bien que les charnières d'articulation 14, 15 agencées au niveau des coins supérieurs latéraux de l'anneau arrière augmentent les efforts du hayon sur la caisse 3 dans ces zones, en particulier lors du roulage du véhicule 1, les supports d'articulation 10 et les éléments sur lesquels ils se fixent offrent une rigidité palliant à ces efforts.

Comme évoqué précédemment, la paroi de fond comprend l'ouverture 10A pour rendre possible le passage d'une pince à souder au travers du support d'articulation 10. Cet orifice permet notamment la soudure du renfort avant extérieur de custode 30 avec la doublure de brancard 50 et/ou avec le renfort arrière de custode partie supérieur 20.

En remarque, la solution selon l'invention atteint donc l'objectif recherché de renforcer la jonction entre chaque gouttière latérale et la doublure de custode adjacente tout en permettant que chaque support d'articulation de la porte de coffre soit très éloigné du plan médian M du véhicule, et ce, tout en évitant la torsion entre la gouttière centrale arrière et/ou la traverse de pavillon arrière avec la doublure de custode, et présente les avantages suivants :
- elle est économique,
- elle est facile à mettre en œuvre puisqu'elle requiert des moyens de production couramment utilisés dans le domaine automobile, à savoir la découpe, l'emboutissage de tôle et la soudure.

## Revendications

1. Support d'articulation (10) pour un ouvrant de type porte de coffre (2), caractérisé en qu'il comprend une forme creuse comprenant un fond (13) s'étendant ou s'étendant sensiblement sur deux plans (P1, P2) sensiblement perpendiculaires, un premier élément de liaison mécanique (11), notamment un élément de fixation, à un renfort arrière de custode (20), et un deuxième élément de liaison mécanique (12), notamment un élément de fixation, à un renfort avant extérieur de custode (30) et/ou à un renfort de brancard (40) et/ou à une doublure de brancard arrière (50).

2. Support d'articulation (10) selon la revendication précédente, **caractérisé en ce qu'**il comprend une première ouverture (10A) ménagée dans la forme creuse de sorte à permettre le passage d'au moins une partie d'une pince de soudure.

3. Support d'articulation (10) selon l'une des revendications précédentes, **caractérisé en ce qu'**il comprend une deuxième ouverture (10B) ménagée dans la forme creuse de sorte à permettre le passage d'au moins un conduit et/ou fil électrique et/ou câble à travers le support d'articulation (10).

4. Support d'articulation (10) selon l'une des revendications précédentes, **caractérisé en ce qu'**il est conformé en tôle, notamment en tôle emboutie, notamment en tôle d'acier, notamment d'une épaisseur comprise en 1 mm et 3 mm, notamment de l'ordre de 1,5 mm.

5. Support d'articulation (10) selon l'une des revendications précédentes, **caractérisé en ce qu'**il comprend un moyen de maintien (14) d'un axe de pivotement (A) d'un ouvrant (2).

6. Support d'articulation (10) selon la revendication précédente, **caractérisé en ce que** le moyen de maintien (14) comprend une chape (4) rapportée sur le support d'articulation (10), notamment fixée au support d'articulation (10) par soudage ou par rivetage ou par au moins un système vis/écrou (5).

7. Agencement (6) côté droit ou côté gauche pour un véhicule, notamment pour un véhicule automobile (1), comprenant un renfort avant extérieur de custode (30) et/ou une doublure de brancard (50) et/ou un renfort arrière de custode (20) et/ou un renfort de brancard (40) et un support d'articulation (10) selon l'une des revendications précédentes, **caractérisé en ce que** le support d'articulation (10) est fixé sur le renfort avant extérieur de custode (30) et/ou sur la doublure de brancard (50) et/ou sur le renfort arrière de custode (20) et/ou sur le renfort de brancard (40), notamment par soudage, notamment par soudage par points.

8. Caisse (3) de véhicule, notamment de véhicule automobile (1), **caractérisée en ce que** la caisse (3) comprend au moins un agencement (6) selon la revendication précédente, notamment un agencement côté droit et un agencement côté gauche, et/ou au moins un support d'articulation (10) selon l'une des revendications 1 à 6.

9. Véhicule, notamment véhicule automobile (1), **caractérisé en ce qu'**il comprend une caisse (3) selon la revendication précédente, et/ou au moins un agencement (6) selon la revendication 7 et/ou au moins un support d'articulation (10) selon l'une des revendications 1 à 6.

## Patentansprüche

1. Gelenkstütze (10) für eine Tür vom Typ Heckklappe (2), **dadurch gekennzeichnet, dass** sie eine hohle Form umfasst, die einen sich in zwei im Wesentlichen senkrechten Ebenen (P1, P2) erstreckenden oder im Wesentlichen erstreckenden Boden (13), ein erstes Element zur mechanischen Verbindung (11), insbesondere ein Element zur Befestigung, an einer hinteren C-Säulen-Verstärkung (20) und ein zweites Element zur mechanischen Verbindung (12), insbesondere ein Element zur Befestigung, an einer vorderen äußeren C-Säulen-Verstärkung (30) und/oder an einer Dachrahmenverstärkung (40) und/oder an einer hinteren Dachrahmenverkleidung (50) umfasst.

2. Gelenkstütze (10) nach dem vorhergehenden Anspruch, **dadurch gekennzeichnet, dass** sie eine erste Öffnung (10A) umfasst, die in der hohlen Form ausgebildet ist, so dass sie den Durchgang mindestens eines Teils einer Schweißzange ermöglicht.

3. Gelenkstütze (10) nach einem der vorhergehenden Ansprüche, **dadurch gekennzeichnet, dass** sie eine zweite Öffnung (10B) umfasst, die in der hohlen Form ausgebildet ist, so dass sie den Durchgang mindestens einer Leitung und/oder eines elektrischen Leiters und/oder eines Kabels durch die Gelenkstütze (10) ermöglicht.

4. Gelenkstütze (10) nach einem der vorhergehenden Ansprüche, **dadurch gekennzeichnet, dass** sie aus Blech geformt ist, insbesondere aus tiefgezogenem Blech, insbesondere aus Stahlblech, insbesondere mit einer Dicke zwischen 1 mm und 3 mm, insbesondere in der Größenordnung von 1,5 mm.

5. Gelenkstütze (10) nach einem der vorhergehenden Ansprüche, **dadurch gekennzeichnet, dass** sie ein Haltemittel (14) für eine Schwenkachse (A) einer Tür (2) umfasst.

6. Gelenkstütze (10) nach dem vorhergehenden Anspruch, **dadurch gekennzeichnet, dass** das Haltemittel (14) eine Gabel (4) umfasst, die auf die Gelenkstütze (10) aufgesetzt ist, insbesondere durch Schweißen oder durch Nieten oder durch mindestens ein Schraube/Mutter-System (5) an der Gelenkstütze (10) befestigt ist.

7. Anordnung (6) einer rechten Seite oder linken Seite für ein Fahrzeug, insbesondere für ein Kraftfahrzeug (1), umfassend eine vordere äußere C-Säulen-Verstärkung (30) und/oder eine Dachrahmenverkleidung (50) und/oder eine hintere C-Säulen-Verstärkung (20) und/oder eine Dachrahmenverstärkung (40) und eine Gelenkstütze (10) nach einem der vorhergehenden Ansprüche, **dadurch gekennzeichnet, dass** die Gelenkstütze (10) an der vorderen äußeren C-Säulen-Verstärkung (30) und/oder an der Dachrahmenverkleidung (50) und/oder an der hinteren C-Säulen-Verstärkung (20) und/oder an der Dachrahmenverstärkung (40) befestigt ist, insbesondere durch Schweißen, insbesondere durch Punktschweißen.

8. Karosserie (3) eines Fahrzeugs, insbesondere eines Kraftfahrzeugs (1), **dadurch gekennzeichnet, dass** die Karosserie (3) mindestens eine Anordnung (6) nach dem vorhergehenden Anspruch, insbesondere eine Anordnung einer rechten Seite und eine Anordnung einer linken Seite, und/oder mindestens eine Gelenkstütze (10) nach einem der Ansprüche 1 bis 6 umfasst.

9. Fahrzeug, insbesondere Kraftfahrzeug (1), **dadurch gekennzeichnet, dass** es eine Karosserie (3) nach dem vorhergehenden Anspruch und/oder mindestens eine Anordnung (6) nach Anspruch 7 und/oder mindestens eine Gelenkstütze (10) nach einem der Ansprüche 1 bis 6 umfasst.

## Claims

1. Articulation support (10) for an opening leaf of the luggage compartment lid type (2), **characterized in that** it comprises a hollow shape comprising a base (13) extending or substantially extending in two substantially perpendicular planes (P1, P2), a first mechanical connection element (11), in particular a fastening element, for connecting to a rear quarterlight reinforcement (20), and a second mechanical connection element (12), in particular a fastening element, for connecting to an outer front quarterlight reinforcement (30) and/or to a side-member reinforcement (40) and/or to a rear side-member lining (50).

2. Articulation support (10) according to the preceding claim, **characterized in that** it comprises a first opening (10A) formed in the hollow shape so as to allow at least part of a pair of welding tongs to pass through.

3. Articulation support (10) according to either of the preceding claims, **characterized in that** it comprises a second opening (10B) formed in the hollow shape so as to allow at least one line and/or electrical wire and/or cable to pass through the articulation support (10).

4. Articulation support (10) according to one of the preceding claims, **characterized in that** it is made of sheet metal, in particular of stamped sheet metal, in particular of sheet steel, in particular with a thickness of between 1 mm and 3 mm, in particular of the order of 1.5 mm.

5. Articulation support (10) according to one of the preceding claims, **characterized in that** it comprises a maintaining means (14) for maintaining a pivot axis (A) of an opening leaf (2).

6. Articulation support (10) according to the preceding claim, **characterized in that** the maintaining means (14) comprises a clevis (4) fitted to the articulation support (10), in particular fastened to the articulation support (10) by welding or riveting or by at least one screw/nut system (5).

7. Right-hand side or left-hand side arrangement (6) for a vehicle, in particular for a motor vehicle (1), comprising an outer front quarterlight reinforcement (30) and/or a side-member lining (50) and/or a rear quarterlight reinforcement (20) and/or a side-member reinforcement (40) and an articulation support (10) according to one of the preceding claims, **characterized in that** the articulation support (10) is fastened to the outer front quarterlight reinforcement (30) and/or to the side-member lining (50) and/or to the rear quarterlight reinforcement (20) and/or to the side-member reinforcement (40), in particular by welding, in particular by spot welding.

8. Body (3) of a vehicle, in particular of a motor vehicle (1), **characterized in that** the body (3) comprises at least one arrangement (6) according to the preceding claim, in particular a right-hand side arrangement and a left-hand side arrangement, and/or at least one articulation support (10) according to one of Claims 1 to 6.

9. Vehicle, in particular a motor vehicle (1), **characterized in that** it comprises a body (3) according to the preceding claim, and/or at least one arrangement (6) according to Claim 7 and/or at least one articulation support (10) according to one of Claims 1 to 6.
